Europäisches Patentamt

European Patent Office

Office européen des brevets

(11) Veröffentlichungsnummer: **0 270 783 B1**

# EUROPÄISCHE PATENTSCHRIFT

(45) Veröffentlichungstag der Patentschrift: 07.08.91

(51) Int. Cl.⁵: **F02M 35/10**

(21) Anmeldenummer: **87115408.4**

(22) Anmeldetag: **21.10.87**

(54) Ansauganlage für eine vorzugsweise mehrzylindrige Brennkraftmaschine.

(30) Priorität: **06.12.86 DE 3641811**

(43) Veröffentlichungstag der Anmeldung:
**15.06.88 Patentblatt 88/24**

(45) Bekanntmachung des Hinweises auf die
Patenterteilung:
**07.08.91 Patentblatt 91/32**

(84) Benannte Vertragsstaaten:
**DE ES FR GB IT NL**

(56) Entgegenhaltungen:
**AT-B- 371 573**
**DE-A- 2 744 039**
**DE-U- 1 762 310**
**US-A- 3 520 284**
**US-A- 4 317 438**

**PATENT ABSTRACTS OF JAPAN, Band 8, Nr. 146 (M-307)[1583], 7. Juli 1984**

**PATENT ABSTRACTS OF JAPAN, Band 5, Nr. 174 (M-96)[846], 10. November 1981**

**AUTOMOBILTECHNISCHE ZEITSCHRIFT, Band 87, Nr. 10, Oktober 1985, Seiten 519,520,523-525,528, Stuttgart, DE; A. KAMPRATH et al.: "Kunststoff-Saugrohre - erste**

**Erfahrungen und Versuchsergebnisse"**

**AUTOMOBILTECHNISCHE ZEITSCHRIFT, Band 89, Nr. 3, März 1987, Seiten 139-144, Stuttgart, DE; H.-G. HALDENWANGER et al.: "Kunststoff-Motorbauteile in Ausschmelz-kerntechnik am Beispiel eines Saugrohres"**

(73) Patentinhaber: **Dr.Ing.h.c. F. Porsche Aktien-gesellschaft**
**Porschestrasse 42**
**W-7000 Stuttgart 40(DE)**

(72) Erfinder: **Gröger, Klaus**
**Saarstrasse 26**
**W-7251 Hemmingen(DE)**
Erfinder: **Ampferer, Herbert, Dipl.-Ing.(FH)**
**Metternzimmerer Strasse 24**
**W-7123 Sachsenheim 2(DE)**

**Beschreibung**

Die Erfindung betrifft eine Ansauganlage für eine mehrzylindrige Brennkraftmaschine, die unter Vermittlung von aus elastischem Werkstoff bestehenden muffenartigen Verbindungselementen mit einem Zylinderkopf der Brennkraftmaschine verbunden ist, welche Verbindungselemente an ihrer Innenseite mit dichtkörperartigen Erweiterungen in korrespondierende Ausnehmungen von Rohrstutzen in der Ansauganlage und im Zylinderkopf eingreifen, wobei am äußeren Umfang der Verbindungselemente im Bereich der Erweiterungen Rillen vorgesehen sind, die je ein Spannglied aufnehmen.

Es ist bekannt, US-A-4,317,438, zwischen einem Vergaserstutzen und einem Einlaßstutzen eines Zylinderkopfs elastische muffenartige Verbindungselemente vorzusehen, die mittels Klemmschellen befestigt sind. Vergleichbare Ausführungen zeigen die JP-A-59-043923 und JP-A-56-101055.

Durch die DE-A 2 744 039 ist es bekannt, eine Saugrohranlage unter Vermittlung eines Dichtkörpers an einen Zylinderkopf anzuschließen.

Schließlich ist es aus der US-A-3,520,284 bekannt, in einen Behälter einer Saugrohranlage Saugrohre einzusezten, die örtlich von Rohrstücken des Behälters umgeben sind, wobei zwischen den Saugrohren und den Rohrstücken Gummiringe vorgesehen sind.

Aufgabe der Erfindung ist es, eine einfach an einer Brennkraftmaschine mittels Verbindungselementen montierebare Ansauganlage zu schaffen, die schwingungsarm an der Brennkraftmaschine gehalten ist.

Erfindungsgemäß wird diese Aufgabe dich die kennzeichnenden Merkmale des Anspruchs 1 gelöst. Weitere, die Erfindung ausgestaltende Merkmale sind den Unteransprüchen enthalten.

Die Mit der Erfindung hauptsächlich erzielten Vorteile sind darin zu sehen, daß die Ansauganlage mit den Verbindungselementen ohne Überhöhten Aufwand an der Brenkraftmaschine montierbar ist. Die Erweiterungen der Verbindungselemente, die in korrespondierende Ausnehmungen der Rohrstutzen eingreifen, sichern eine gute Dichtwirkung. Letztere wird noch durch die leicht herstellbaren Spannglieder unterstützt.

Besteht die Ansauganlage aus metallischem Werkstoff, so ist es aus schwingungstechnischen Gründen von Vorteil, wenn sie mittels der Verbindungselemente und elastischen Lagerelementen an der Brennkraftmaschine gehalten ist.

In der Zeichnung werden Ausführungsbeispiele der Erfindung gezeigt, die nachstehend näher beschrieben sind.

Es zeigt

Fig. 1 einen Teilquerschnitt einer Brennkraftmaschine mit der erfindungsgemäßen Ansauganlage,

Fig. 2 eine Einzelheit W der Fig. 1 in größerem Maßstab,

Fig. 3 eine Einzelheit X der Fig. 2 in größerem Maßstab,

Fig. 4 eine Einzelheit Y der Fig. 2,

Fig. 5 eine Ansicht in Pfeilrichtung A der Fig. 4,

Fig. 6 eine Ansicht in Pfeilrichtung B der Fig. 2,

Fig. 7 eine Ansicht in Pfeilrichtung C der Fig. 2,

Fig. 8 eine Einzelheit Z der Fig. 7 in größerem Maßstab,

Fig. 9 eine Teilansicht der Brennkraftmaschine von einer ihrer Stirnseiten aus betrachtet.

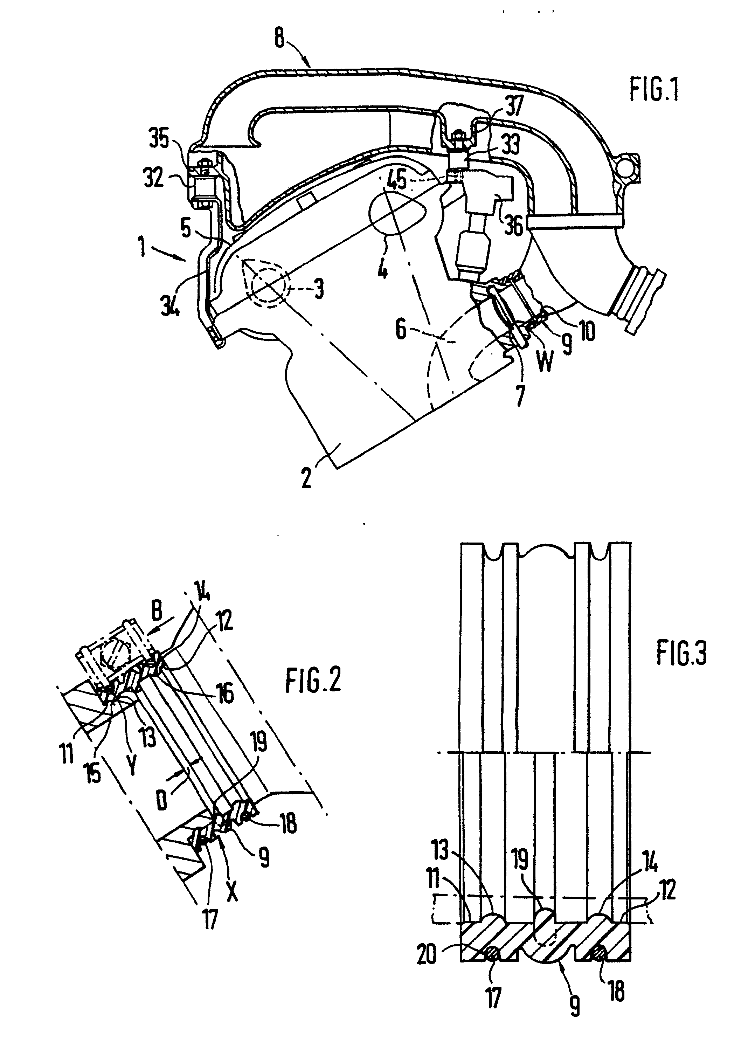

Von einer mehrzylindrigen Brennkraftmaschine 1 dargestellt ist ein Zylinderkopf 2 und eine Nokkenwellen 3, 4 abdeckende Haube 5. Der Zylinderkopf 2 weist Saugrohrkanäle 6 auf, die aus dem Zylinderkopf 2 seitlich herausragenden Rohrstutzen 7 versehen sind. An den Rohrstutzen 7 angeschlossen ist eine Ansauganlage 8 und zwar unter Vermittlung von aus elastischem Werkstoff bestehenden muffenartigen Verbindungselementen 9. Jedes Verbindungselement 9 wirkt mit dem Rohrstutzen 7 und eine Rohrstutzen 10 der Ansauganlage 8 zusammen, dergestalt, daß es die Rohrstutzen übergreift. Zwischen den Rohrstutzen 7 und 10 ist ein relativ geringer Anstand D vorgesehen (Fig. 2). An der Innenseite des als kreiszylindrischer Körper ausgebildeten Verbindungselements 9 sind Dichtbereiche 11, 12 vorgesehen, die örtliche umlaufende dichtkörperartige Erweiterungen 13, 14 aufweisen, die in korrespondierende Ausnehmungen 15, 16 der Rohrstutzen 7 und 10 eingreifen. Die Dichtbereiche 11, 12 und die Erweiterungen 13, 14 arbeiten form- und kraftschlüssig mit den Rohrstutzen 7 und 10 zusammen. Am äußeren Umfang des beispielsweise aus Gummi hergestellten Verbindungselements 9 sind drahtförmige Spannglieder 17, 18 vorgesehen, die im Bereich der Erweiterungen 13, 14 zumindest Über einen Wesentlichen Teilumfang des Verbindungselements 9 wirksam sind.

Das Verbindungselement 9 weist an der Innenseite noch eine weitere Erweiterung 19 auf, die sich zwischen den Rohrstücken 7 und 10 erstreckt.

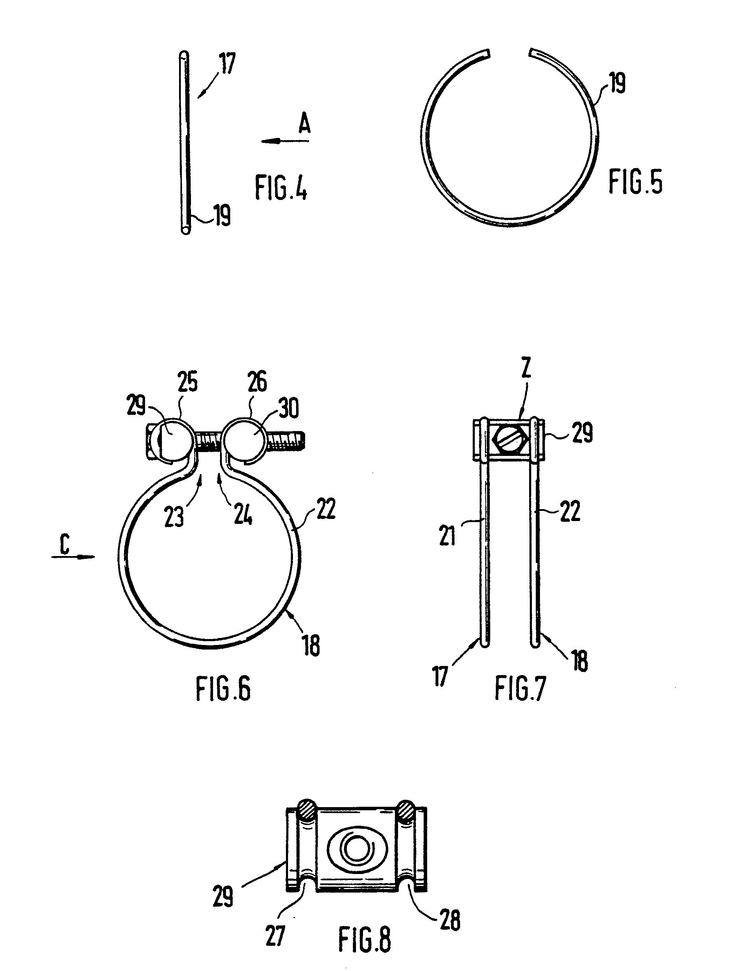

Gemäß den Fig. 4 und 5 ist das Spannglied 17 eine geschlitzte Federklammer 19, deren Durchmesser nach der Herstellung kleiner ist als der Innendurchmesser einer Rinne 20 des Verbindungselementes 9, die zur Aufnahme der Federklammer 19 dient.

In Fig. 6 und 7 sind die Spannglieder 17, 18 Drahtringe 21, 22, deren Enden 23, 24 Mit Ösen 25, 26 versehen sind. Diese Ösen umschließen Rinnen 27, 28 (Fig. 8) von parallelen Bolzen 29, 30, dergestalt, daß jeweils zwei Drahtringe, nämlich 21 und 22, zur Befestigung eines Verbindungselementes zusammengefasst sind. Die Bolzen 29, 30 wirken mit einer Spannschraube 31 zusammen. Die Spannschraube 31 erstreckt sich außerhalb des Durchmessers der Drahtringe 21, 22.

Zur Schwingungsentkopplung ist die Ansauganlage 8 unter Vermittlung von elastischen Lagerelementen 32, 33 an der Brennkraftmaschine 1 gehalten (Fig. 1). Die Lagerelemente 32, 33 sind zwischen der Ansauganlage 8 und der Brennkraftmaschine 1 vorgesehen, wobei das Saugrohr benachbart von der Haube 5 verläuft. Das Lagerelement 32 stützt sich einerseits auf einem Halter 34 ab und andererseits trägt es einen Stützflansch 35 des Saugrohrs 8. Zur Befestigung des Lagerelements 32 Halter 34 bzw. Stützflansch 35 dienen Schraubenmuttern. Das Lagerelement 33 ist mit eine Gewindezapfen 45 in ein ortsfestes Teil 36 der Brennkraftmaschine 1 eingedreht. Darüber hinaus ist es an einen weiteren Stützflansch 37 der Ansauganlage herangeführt.

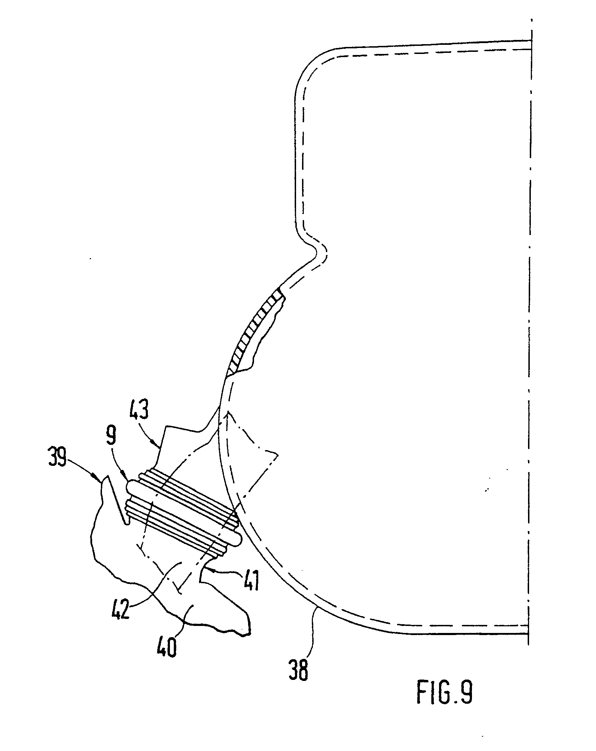

Nach Fig. 9 ist eine aus Kunststoff bestehende Ansauganlage 38 zwischen zwei V-förmigen Zylinderreihen angeordnet, wobei im Ausführungsbeispiel lediglich die linke Zylinderreihe 39 angedeutet ist. Die Zylinderreihe 39 umfasst einen Zylinderkopf 40 aus dem Rohrstutzen 41, die Bestandteil von Ansaugkanälen 42 sind, herausgeführt. Der Rohrstutzen 41 verläuft relativ aufrecht und dient als Stütze für einen Rohrstutzen 43 der Ansauganlage 38. Zwischen den Rohrstutzen 41 und 43 ist ein Verbindungselement 9 vorgesehen, das den bereits detailliert beschriebenen Verbindungselement 9 baulich entspricht. Weitere Lagerelemente zwischen Ansauganlage 38 und Brennkraftmaschine können bei dieser Ausführung entfallen.

## Patentansprüche

1. Ansauganlage (8) für eine mehrzylindrige Brennkraftmaschine (1), die unter Vermittlung von aus elastischem Werkstoff bestehenden muffenartigen Verbindungselementen (9) mit einem Zylinderkopf (2) der Brennkraftmaschine (1) verbunden ist, welche Verbindungselemente (9) an ihrer Innenseite mit dichtkörperartigen Erweiterungen (13, 14) in korrespondierende Ausnehmungen (15, 16) von Rohrstutzen (7, 10) in der Ansauganlage (8) und im Zylinderkopf (2) eingreifen, wobei am äußeren Umfang der Verbindungselemente (9) im Bereich der Erweiterungen (13, 14) Rillen (20) vorgesehen sind, die je ein Spannglied (17, 18) aufnehmen, dadurch gekennzeichnet, daß die Spannglieder (17, 18) aus einem paar nicht geschlossener Drahtringe (21, 22) bestehen, die je an jedem Ende Ösen (25, 26) zur Aufnahme von Bolzen (29, 30) aufweisen, die die paarweise angeordneten Drahtringe (21, 22) miteinander verbinden, wobei die Bolzen (29, 30) über eine einzige Spannschraube (31) in Wirkverbindung stehen, womit die Spannwirkung auf die Verbindungselemente (9) einstellbar ist.

2. Ansauganlage nach Anspruch 1, dadurch gekennzeichnet, daß die Ansauganlage (8) unter Vermittlung der Verbindungselemente (9) und von elastischen Lagerelementen (32, 33) an der Brennkraftmaschine (1) gehalten ist.

3. Ansauganlage nach Anspruch 2, die benachbart einer Abdeckhaube einer vorzugsweise aufrechten Zylinderreihe verläuft, dadurch gekennzeichnet, daß mehrere im Abstand zueinander angeordnete Lagerelemente (32, 33) zwischen Ansauganlage (8) und festen Teilen der Brennkraftmaschine vorgesehen sind.

4. Ansauganlage nach Anspruch 1, die zwischen V-förmig angeordneten Zylinderreihen angeordnet ist, dadurch gekennzeichnet, daß die Ansauganlage (38) aus Kunststoff besteht und ausschließlich unter Vermittlung der Verbindungselemente (9) am Zylinderkopf (40) gehalten ist, wobei die Ansauganlage (38) sich mit Rohrstutzen (43) auf Rohrstutzen (41) des Zylinderkopfs (40) abstützt.

## Claims

1. A suction unit (8) for a multi-cylinder internal-combustion engine (1), which is connected to a cylinder head (2) of the internal-combustion engine (1) through the intermediary of sleeve-shaped connecting elements (9) which consist of resilient material and which have enlargements (13, 14) - in the shape of sealing bodies - on their inner side which engage in corresponding recesses (15, 16) of pipe connection pieces (7, 10) in the suction unit (8) and in the cylinder head (2), grooves (20) being provided on the outer circumference of the connecting elements (9) in the region of the enlargements (13, 14), which grooves each receive a tightening member (17, 18), characterised in that the tightening members (17, 18) consist of a pair of unclosed wire rings (21, 22) which each have eyes (25, 26) at each end for receiving pins (29, 30) which interconnect the wire rings (21, 22), which are arranged in pairs, the pins (29, 30) being in operative connection via a single tightening screw (31) with which the tightening action on the connecting elements (9) is adjustable.

2. A suction unit according to Claim 1, characterised in that the suction unit (8) is held on the internal-combustion engine (1) through the intermediary of the connecting elements (9) and by resilient bearing elements (32, 33).

3. A suction unit according to Claim 2, which extends adjacent to a covering hood of a preferably upright row of cylinders, characterised in that several bearing elements (32, 33), which are arranged apart, are provided between suction unit (8) and fixed parts of the internal-combustion engine.

4. A suction unit according to Claim 1, which is arranged between cylinder rows, which are arranged in a V-shaped manner, characterised in that the suction unit (38) consists of synthetic material and is held on the cylinder head (40) exclusively through the intermediary of the connecting elements (9), the pipe connection pieces (43) of the suction unit (38) resting on the pipe connection pieces (41) of the cylinder head (40).

**Revendications**

1. Système d'aspiration (8) pour un moteur à combustion interne multicylindres (1), qui est relié à une tête de cylindre (2) du moteur à combustion interne (1) par l'intermédiaire d'éléments de liaison (9) du type manchon et constitué en une matière élastique e, lesquels éléments de liaison pénètrent par leur côté interne et au moyen de bourrelets (13, 14) du type corps d'étanchéité dans des évidements (15, 16) correspondants de tubulures (7, 10) du système d'aspiration (8) et de la tête de cylindre (2), des rainures (20) étant prévues sur la périphérie extérieure des éléments de liaison (9) dans la région des bourrelets (13, 14), qui reçoivent chacune un organe de serrage (17, 18), caractérisé en ce que les organes de serrage (17, 18) sont constitués par une paire d'anneaux de fil non fermés (21, 22) présentant chacun à une extrémité un oeillet (25, 26) pour recevoir des tenons (29, 30), qui relient l'un à l'autre les anneaux de fil (21) disposés par paire, les tenons (29, 30) étant en liaison active avec une unique vis de serrage (31), 1' effet de serrage pouvant ainsi être réglé sur les éléments de liaison.

2. Système d'aspiration selon la revendication 1, caractérisé en ce que le système d'aspiration (8) est monté sur le moteur à combustion interne (1) par l'intermédiaire d'éléments de liaison (9) et d'éléments d'appui élastiques (32, 33).

3. Système d'aspiration selon la revendication 2, disposé au voisinage d'un capot recouvrant une rangée de cylindres de préférence verticaux, caractérisé en ce que plusieurs éléments d'appui (32, 33) disposés à une certaine distance les uns des autres sont prévus entre le système d'aspiration (8) et les parties fixes du moteur à combustion interne.

4. Système d'aspiration selon la revendication 1, monté entre des rangées de cylindres disposées en V, caractérisé en ce que le système d'aspiration (38) est réalisé en matière plastique et est maintenu sur la tête de cylindre (50) exclusivement par l'intermédiaire des éléments de liaison (9), le système d'aspiration (38) s'appuyant par des tubulures (43) sur des tubulures (41) de la tête de cylindre (40).

FIG.1

FIG.2

FIG.3

FIG.4

FIG.5

FIG.6

FIG.7

FIG.8

FIG.9